# EUROPEAN PATENT SPECIFICATION

(11) **EP 2 400 368 B1**
(45) Date of publication and mention of the grant of the patent: **18.03.2020**
(21) Application number: 10191444.8
(22) Date of filing: 16.11.2010
(51) Int. Cl.: G06F 1/20, G06F 1/28, G06F 1/3203

(54) **Power cut-off based on current**
Stromabschaltung basierend auf Strom
Coupure de l'alimentation basée sur le courant

(30) Priority: 24.06.2010 US 358176 P
(43) Date of publication of application: 28.12.2011
(73) Proprietor: BlackBerry Limited, Waterloo, ON N2K 0A7 (CA)
(72) Inventor: Dolbec, Jean, Kanata Ontario K2K 3K1 (CA); Cornish, Malcom Mackenzie, Kanata Ontario K2K 3K1 (CA); Piccoli, John Anthony, Kanata Ontario K2K 3K1 (CA); Palmer, Kenneth Robert, Kanata Ontario K2K 3K1 (CA)
(74) Representative: Vigand, Philippe

(56) References cited:
- WO-A1-2006/009672
- US-A1- 2002 093 311
- US-A1- 2002 118 500
- US-A1- 2005 138 438
- US-A1- 2008 080 115
- US-A1- 2008 291 161
- US-A1- 2009 276 651
- US-A1- 2009 290 625
- US-A1- 2009 322 150

## Description

This patent application claims the benefit of priority to Dolbec et al. U.S. Provisional Patent Application Serial Number 61/358,176 entitled "POWER CUT-OFF BASED ON CURRENT" filed on June 24, 2010 (Attorney Docket No. 2558.063PRV).

### BACKGROUND

Heat management is a factor in nearly all electronic devices. Heat management can comprise controlling the amount of heat generated as well as adequately dissipating the heat that is generated. These heat management measures can reduce the possibility of overheating of electrical components, and enable compliance with safety standards such as those from Underwriter Laboratories (UL) and the Institute for Electrical and Electronics Engineers (IEEE).

Many different techniques can be used for heat management, and generally multiple different techniques are used in combination. These techniques include selective placement of heat generating components, use of heat sinks on high heat generating components, fans to move air around the device, as well as the design of the device packaging. Continual decreases in device size and increases in heat generation make heat management a continuing challenge during device design.

US 2008/0080115 discloses a power distribution unit that switches off power outlets in the event of an over-current condition by using circuitry that measures how long input current has exceeded a threshold and sending a reset signal to the power outlets when input current has exceeded the threshold for a predetermined time duration.

US 2009/276651 discloses methods and apparatuses for dynamically budgeting power usage in a data processing system. In one aspect, a data processing system, includes: one or more first components capable of being dynamically throttled to a plurality of different performance level settings; one or more second components; and one or more power usage sensors. The one or more power usage sensors are to determine information on power usage during a first time period of operation of the data processing system. The one or more first components and the one or more second components may include a computing element to determine one of the performance level settings of the one or more first components of the data processing system for a second time period subsequent to the first time period using the information on the power usage during the first time period. In one embodiment, when a microcontroller used to dynamically budget a power usage determines that the average of past N power usage samples exceeds a power limit for a number of continuous time intervals, the microcontroller may assume that throttling settings are not enforced properly and automatically initiate a shutdown process.

US 2005/138438 relates to a current level of power consumption of a system is monitored by a power consumption controller. When the current level of power consumption exceeds power guidelines, the power consumption controller adjusts the power consumption of one or more components in the system at a time by at least one power consumption level. Adjusting such power consumption level may have an impact on the performance of the system. Various techniques may be used to reduce (ramp down) power consumption or allow increase (ramp up) in power consumption. A power management policy may use one or combination of such techniques in order to enable the system to deliver the high performance while still maintaining the power consumption of the system within the power guidelines. In one embodiment, if it is determined that a current level of power consumption exceeds a high threshold, a high threshold warning is generated. When a number of high threshold warnings exceeds a set limit or when there are too many high threshold warnings within a period of time, or when the high threshold warning lasts for a long period of time, the system may be in a critical state and more drastic actions may need to be performed, such as placing all components in a lowest power consumption or thermal state, taking one or more components off line or shutting them down, or even gracefully shutting down all of the components in the system.

The present invention is set out in the independent claims, with some optional features set out in the claims dependent thereto.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates generally an example block diagram of a portable electronic device principally showing the communicative couplings between components.
FIG. 2 illustrates generally an example block diagram of the portable electronic device of FIG. 1 showing the power circuits for components.
FIG. 3 illustrates generally an example flow chart for cutting-off power based on current in the portable electronic device of FIGs. 1 and 2.
FIG. 4 illustrates generally another example flow chart for cutting-off power based on current in the portable electronic device of FIGs. 1 and 2.
FIGs. 5A and 5B illustrate generally another example flow chart for cutting-off power based on current in the portable electronic device of FIGs. 1 and 2.

### DETAILED DESCRIPTION

The present inventors have recognized, among other things, a method for protecting a portable electronic device from overheating. In general, to "overheat" is to become hotter than a temperature threshold. The concepts described herein are not restricted to any particular source or sources of heat, nor are the concepts limited to any particular temperature threshold. The temperature threshold may be, but not need be, a temperature high enough that physical properties of materials or functionality of electronic components are impaired. The temperature threshold may also be based on regulations (e.g., UL, IEEE standards) having temperature guidelines or requirements. Overheating may vary from electronic device to electronic device or from component to component.

The method includes measuring a current on the portable electronic device and determining, as a function of the current, whether the portable electronic device may overheat, that is, whether the portable electronic device is likely to overheat if heating conditions are allowed to continue. When considering whether a portable electronic device may overheat, it may be considered whether the device as a whole is likely to overheat, or whether one or more sites or components are likely to overheat, or any combination thereof. It may be determined that a device "may overheat" before the heat threshold for actual overheating has been reached. When the portable electronic device is likely to overheat, one or more components in the portable electronic device can be turned off. Accordingly, the portable electronic device can be prevented from reaching a temperature that is above desired limits. In some examples, the method can make use of current sensors that are already present in conventional portable electronic devices. These already present current sensors may, for example, have been used to determine current flow from a battery for aiding in estimating the remaining capacity of the battery. The method described herein can use current readings from these current sensors to determine when the portable electronic device is likely to overheat.

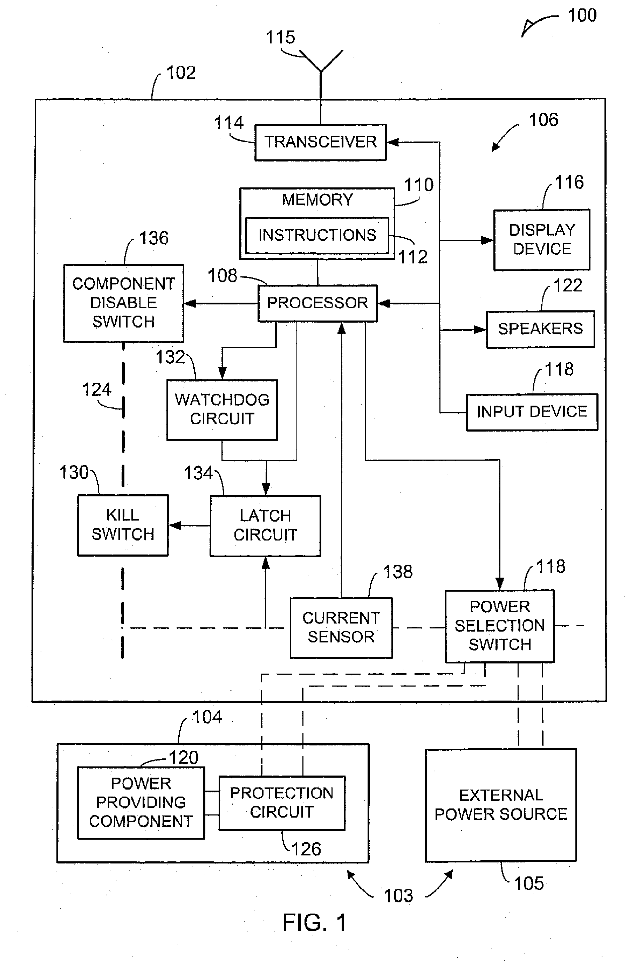

FIG. 1 illustrates generally an example block diagram of a portable electronic device 100. The portable electronic device 100 includes a body 102 having a plurality of system components 106 that can receive power from one or more power sources 103. For example, the system components 106 can receive power from an internal power pack 104 and an external power source 105. The body 102 comprises an enclosed structure housing the plurality of system components 106. The plurality of system components 106 can implement the functionality of the portable electronic device 100, such as processing, display, transmission, and receiving capabilities, among other things.

The system components 106 of the body 102 can include a processor 108 coupled to a memory device 110 having instructions 112 thereon for execution by the processor 108. In general, "coupled" as used herein can refer to a physical relation of components such that one coupled component can send and/or receive signals or power to/from another coupled component. Components that are electrically or communicatively coupled may be, but need not be, in physical contact with or proximate to one another. The instructions 112 can comprise software for implementing the functionality of the portable electronic device 100 with the system components 106. For example, the software can cause the display device 116 to display a graphical user interface (GUI), cause the transceiver 114 to transmit and receive signals, cause the speakers 122 to produce a given sound, and/or capture inputs from the input device 118 for storage in memory 110. The processor 108 can include any component capable of executing instructions 112. For example, the processor 108 can include a central processing unit (CPU), a microprocessor, a network processor, a microcontroller, or a field programmable gate array (FPGA). As an example, the processor 108 is "configured" to perform a function when the memory 110 includes instructions 112 which, when executed by the processor 108, cause the processor 108 to carry out the function.

The system components 106 can also include a transceiver 114 coupled to an antenna 115 for transmitting and receiving signals from external devices. The system components 106 can also include a display device 116 for displaying information for a user, and an input device 118 for receiving information from a user. The input device 118 can be a standalone component such as a keypad, or can be incorporated into the display device 116 such as in a touch screen. The system components 106 can also include one or more speakers 122 for providing audible signals to a user.

In an example, the portable electronic device 100 can be configured to operate in accordance with one or more frequency bands and/or standards profiles including a Global System for Mobile Communications (GSM), 3rd Generation Partnership Project (3GPP), 3rd Generation Partnership Project 2 (3GPP2), or an Institute of Electrical and Electronics Engineers (IEEE) standard. Example standards include an Enhanced Data rates for GSM Evolution (EDGE) (also referred to as Enhanced General Packet Radio Service (EGPRS)) standards profile, evolution-data optimized (EVDO) standards profile, a Worldwide Interoperability for Microwave Access (WiMAX) standards profiles (e.g., IEEE 802.16 standards), a WCDMA standards profile, a 3G HSPA standards profile, a Wi-Fi capable device (e.g., the IEEE 802.11 family of standards), and a Universal Terrestrial Radio Access Network (UTRAN) Long Term Evolution (LTE) standards profile.

Examples of the portable electronic device 100 include a personal digital assistant (PDA), a laptop computer, a web tablet, a net-book, a wireless telephone, a wireless headset, a pager, an instant messaging device, a digital camera, an access point, a television, a medical device (e.g., a heart rate monitor, a blood pressure monitor, etc.), or other electronic device.

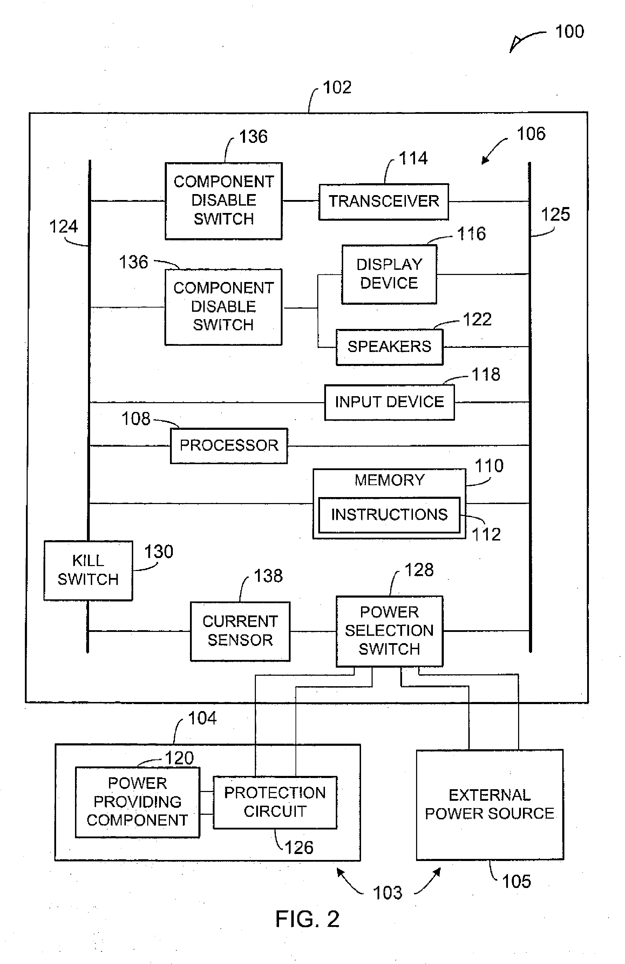

FIG. 1 principally illustrates the communicative couplings (e.g., the signal/data lines) between the system components 106 of the portable electronic device 100. The present description, however, also discusses the power circuits for the system components 106. Accordingly, FIG. 2 illustrates generally an example block diagram showing the power circuits for the system components 106 of the portable electronic device 100. That is, FIG. 2 illustrates the power circuits that couple the system components 106 to the power sources 103 such that the power sources 103 can provide power to the system components 106. FIG. 2 does not show the communicative couplings between the system components 106. Notably, FIG. 1 does show some power circuits as illustrated by dotted lines.

As shown in FIG. 2, the system components 106 can be coupled in parallel between a supply rail 124 and a return rail 125. The supply rail 124 can, for example, deliver a positive DC voltage from the power sources 103 to the system components 106, The power circuit between the power sources 103 and the system components 106 is completed via the return rail 125. A power selection switch 128 can control whether the supply rail 124 is coupled to the internal power pack 104 or the external power source 105. Accordingly, the power selection switch 128 can control whether the system components 106 receive power from the internal power pack 104 or the external power source 105.

The internal power pack 104 comprises a portable structure configured to dock with the body 102. In an example, the internal power pack 104 and the body 102 are a unitary structure and the internal power pack 104 is removable from the body 102. The internal power pack 104 includes one more power providing components 120 that can provide power for the system components 106. In an example, the power providing components 120 can include one or more re-chargeable battery cells (e.g., in a smart battery), fuel cells, a fuel tank, or other portable power source. Re-chargeable battery cells can include lithium-ion cells, nickel-cadmium cells, and others. The power providing components 120 can also include one or more battery cells in conjunction with other power sources. The internal power pack 104 can include a protection circuit 126 for protecting the internal power pack 104 from, for example, current draw over limits of the internal power pack 104, overcharging or over discharging of the power providing components 120, and overheating of the internal power pack 104. In an example, the protection circuit 126 can de-couple the internal power pack 104 from the body 102 when a protection event (e.g., excessive current draw, overcharging, over discharging, overheating) occurs. The external power source 105 can include a universal serial bus (USB) controller (e.g., on a general purpose computer), an IEEE 1394 controller, an alternating current (AC) source (e.g., line power), a wireless charger, or other power source.

In addition to the power selection switch 128, the body 102 can also include a kill switch 130 on the supply rail 124 coupled in series between the system components 106 and the power selection switch 128. The kill switch 130 can selectively close and open circuit the power circuit between the system components 106 and the power sources 103. When the kill switch 130 is in a conductive state, power is allowed to propagate from the power source 103 selected by the power selection switch 128 to the system components 106. When the kill switch 130 is in a non-conductive state, power is not allowed to propagate from the power sources 103 to the system components 106. The kill switch 130 can include one or more transistors (e.g., a field effect transistor (FET)), relays, controllable fuses, or other switching devices.

Although the kill switch 130 is illustrated on the supply rail 124, in other examples the kill switch 130 can be at different locations in the power circuit for the system components 106. For example, instead of a single kill switch 130 between the system components 106 and the power selection switch 128, multiple kill switches can be used, where a kill switch is coupled between each power source 103 and the power selection switch 128. Here, to disable all power to the system components 106 all of the kill switches are set to a non-conductive state. In another example, the kill switch 130 may be located on the return rail 125 of the power circuit for the system components 106. In any case, the kill switch(es) 130 may be set to a non-conductive state to cut-off power to the system components 106.

Additionally, in some examples, one or more component disable switches 136 can be included in the body 102. The component disable switches 136 can be coupled in series between an individual or subset of the system components 106 and the power sources 103. The component disable switches 136 can be coupled between the supply rail 124 or the return rail 124 and the respective individual or subset of components 106. Similar to the kill switch 130, the component disable switches 136 can cut-off power to the respective individual or subset of components 106 when set to a non-conductive state. In an example, each component disable switch 136 is coupled to the processor 108 and can be individually controlled irrespective of other component disable switches 136. The component disable switches 136 can include one or more transistors (e.g., a field effect transistor (FET)), relays, controllable fuses, or other switching devices.

The body 102 can also include a current sensor 138 for detecting the current draw on the supply rail 124. The current sensor 138 can provide readings indicative of the current draw to the processor 108. In an example, the current sensor 138 can include a resistor coupled in series between the system components 106 and the power sources 103. The current sensor 138 can also include an analog to digital converter (ADC) for converting current values sensed by the resistor to digital readings for the processor 108. In another example, the current sensor 138 can include a coulomb counter.

Although the current sensor 138 is illustrated as measuring the current on the supply rail 125, in other examples, the current sensor 138 can be located at different positions in the portable electronic device 100. For example, instead of a single current sensor 138 between the system components 106 and the power selection switch 128, multiple current sensors can be used, where a current sensor is coupled between each power source 103 and the power selection switch 128. In another example, the current sensor 138 may be located on the return rail 125 of the power circuit for the system components 106. In yet other examples, one or more current sensors 138 can be positioned to determine a current draw of an individual or subset of the system components 106.

Additionally, the body 102 can include a latch circuit 134 coupled to the kill switch 130 and the processor 108 to control the kill switch 130 based on a signal from the processor 108. When the kill switch 130 is set to a conductive state, the latch circuit 134 can be configured to maintain the kill switch 130 in the conductive state until a signal is received from the processor 108 to set the kill switch 130 to a non-conductive state. When a signal is received from the processor 108, the latch circuit 134 can set and hold the kill switch 130 in a non-conductive state until the power is cycled as detected on the supply rail 124. The power can be cycled by disconnecting all power sources 103 from the body 102 and re-connecting one or more of power sources 103 to the body 102. When the power is cycled, the latch circuit 134 can set the kill switch 130 to a conductive state.

Finally, a watchdog circuit 132 can be coupled to the latch circuit 134 and the processor 108. The watchdog circuit 132 can be configured to receive a signal from the processor 108 and control the kill switch 130 based on the signal. The watchdog circuit 132 can be configured to set the kill switch 130 to a non-conductive state when a hardware or software error causes the processor 108 to not send a periodic signal to the watchdog circuit 132. More detail regarding the watchdog circuit 132 is provided below.

The components described in FIG. 2 can be implemented in any manner sufficient to achieve the functionality described. For example, the components can be implemented as discrete components on one or more circuit boards or application specific integrated circuits (ASICs). The components can also be implemented as a single or more than one integrated circuit, or as part of a large, more general power management integrated circuit (PMIC).

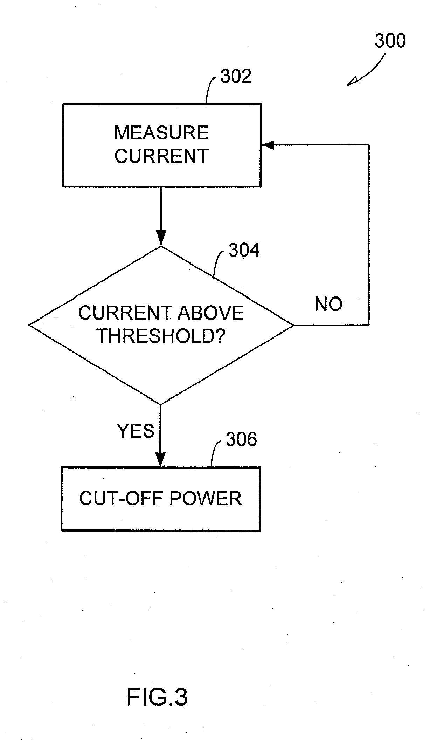

FIG. 3 illustrates a flow chart of an example method 300 for cutting-off power as a function of current draw in a portable electronic device 100. Method 300 cuts-off power to one or more system components 106 when a current measured by the current sensor 138 is above a threshold. Method 300 can be used to protect a portable electronic device 100 from overheating due to malfunctioning hardware or software on the portable electronic device 100. For example, when one of the system components 106 malfunctions, the malfunctioning system component 106 may begin to draw current at a higher rate than during normal operations. This high rate of current draw can cause the malfunctioning component or other components of the portable electronic device 100 to generate heat at a higher rate than normal. This can cause the portable electronic device 100 to reach a temperature higher than desired, or higher than a temperature allowed by regulations (e.g., UL, IEEE standards). Accordingly, the method 300 can be used to cut-off power, and therefore shut down malfunctioning components and/or other components to protect against overheating of the portable electronic device 100.

At block 302, a current reading is obtained by the current sensor 138. In one example, the current reading is obtained from the supply rail 124 and is indicative of the current draw for all of the system components 106. In other examples, the current reading can be indicative of the current draw of an individual or subset of the system components 106.

At block 304, the current reading can be compared to a threshold current. The threshold current can be a static value, and can be, for example, based on a maximum theoretical current draw for the system components 106. For example, each component 106 has a maximum amount of current that the component 106 can draw at a given moment. The maximum theoretical current draw can be equal to the maximum amount of current that all of the system components 106 could draw at a given moment. The threshold current can be equal to the maximum theoretical current draw or can be set slightly above or below the maximum theoretical current draw in order to, for example, compensate for estimation errors. In other examples, the threshold current can be set based on other criteria. For example, the threshold current can be set based on a current draw to temperature relationship. That is, an empirical relationship can be determined between temperature and current draw. The threshold current can be set based on a current value that corresponds to a maximum desired temperature in the empirical relationship.

When the measured current is below the threshold current, the portable electronic device 100 is likely operating normally, the current measurement can be discarded, and the method 300 can proceed back to the block 302 to obtain a new current reading at a later time. When the measured current is above the threshold current, one or more system components 106 and/or the software are likely malfunctioning.

Accordingly, at block 306 power is cut-off to one or more system components 106. In an example, the current sensor 138 measures the current on the system rail 124 and power is cut-off to all of the system components 106 be sending a signal from processor 108 to the latch circuit 134. The latch circuit 134 can then set the kill switch 130 to a non-conductive state in response to the signal from the processor 108. Cutting-off power to all of the system components 106 can cause the portable electronic device 100 to cease operating.

In another example, the current sensor 138 measures the current drawn by an individual or subset of components 106 (e.g., the transceiver 114) and a component disable switch 136 corresponding to the individual or subset of components 106 is set to a non-conductive state. Accordingly, the individual or subset of components 106 can cease operating, while other system components 106 can continue operating. Similarly, in yet another example, individual or subsets of components 106 can be shut off by the software on the memory 110 in response to a current reading above the threshold current.

In an example, when power is cut-off to one or more system components by setting kill switch 130 to a non-conductive state, the power remains off until the power is cycled as discussed above. That is, the latch circuit 134 can maintain the kill switch 130 in a non-conductive state until the power is cycled. In other examples, the kill switch 130 (or component disable switch 136) can remain in a non-conductive state until other criteria are satisfied, such as until the kill switch 130 (or component disable switch 136) is physically replaced as would occur when the kill switch 130 (or component disable switch 136) is a controllable fuse.

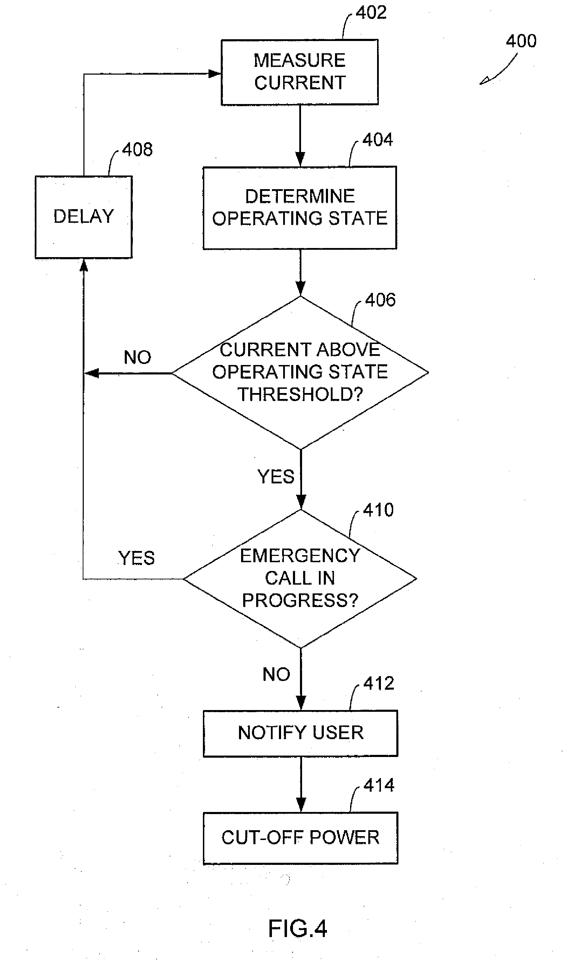

FIG. 4 illustrates another example of a method 400 for cutting-off power as a function of current draw in the portable electronic device 100. At block 402, a current reading can be obtained as described with respect to block 302.

At block 404, an operating state of the portable electronic device 100 can be determined. In some examples, the threshold current can be dynamically set based on an operating state of the portable electronic device 100. The threshold current can be set based on the maximum theoretical current draw for the operating state while the current measurement is obtained. For example, as discussed above each component 106 has a maximum amount of current that the component 106 can draw in a given state (e.g., ON or OFF). Accordingly, the processor 108 can determine which system components 106 are ON and which system components 106 are OFF, and determine a maximum theoretical current draw for the system components 106 based on which are ON and OFF. In some examples, the processor 108 can determine whether certain system components 106 (e.g., high current draw components such as transceiver 114, display 116, speakers 122) are ON, and ignore other system components 106.

In yet another example, in addition to determining whether a given component 106 is ON or OFF, the processor 108 can determine a more specific state of the component 106. The maximum theoretical current draw for that component 106 can then be based on the specific state of the component 106. For example, the processor 108 can determine that the display 116 is operating in a state of 50% brightness. Based on the state of 50% brightness, the maximum theoretical current draw for the display 116 can be set to 50% of the maximum theoretical current draw for the display 116 when the display is operating in a state of 100% brightness. In still other examples, the operating state can be determined based on a mode of the operating system. Examples of modes of the operating system can include when the portable electronic device 100 is current or imminently transmitting (e.g., during a telephone call), when the portable electronic device 100 is browsing the internet, watching a video, or executing a video game.

In any case, an operating state for the portable electronic device 100 can be determined and a maximum theoretical current draw can be determined for that operating state. The threshold current can be then be dynamically set based on the maximum theoretical current for the operating state. In some examples, the threshold current can be set to equal to the maximum theoretical current draw for the given operating state. In other examples, the threshold current can be set to a value above or below the maximum theoretical current draw to, for example, compensate for estimation errors. In examples where the current reading is indicative of the current draw for an individual or subset of the system components 106, the maximum theoretical current draw can be determined based on an operating state of the individual or subset of system components 106,

At block 406, the current measurement can be compared to the dynamic threshold current as determined based on the operating state. When the current reading is below the threshold current, the current draw does not indicate that the portable electronic device 100 is likely to overheat, and the method 400 returns to 402 after an optional delay at block 408 to obtain a current reading at a later time. When the current reading is above the threshold current, the method 400 can proceed toward cutting-off power at 412.

In some examples, once the processor 108 determines that the current reading is above the threshold current, other criteria can be considered prior to cutting-off power at block 414. For example, at optional block 410, the processor 108 can determine whether the portable electronic device 100 is in an emergency mode. In an example, an emergency mode can include when the portable electronic device 100 is on a "911" call. In an example, when the portable electronic device 100 is in an emergency mode, the method 400 can proceed back to 402 after an optional delay at block 408 to measure the current at a later time. In other examples, the method can remain at 410 and continue to determine whether the portable electronic device 100 is in an emergency mode. This cycle can continue until the portable electronic device 100 is no longer in an emergency mode when the method 400 continues toward cutting-off power at block 414. Accordingly, when the portable electronic device 100 is in an emergency mode, the portable electronic device 100 can ignore a current reading over the threshold current to maintain operation of the portable electronic device 100 during an emergency situation.

At optional block 412, a notification can be made that power is to be cut-off to one or more system components 106. The notification can be made by any means sufficient to convey information to a user. For example, a text or image notification can be shown on the display device 116, an audible tone or speech can be provided from the speakers 122, or a light (e.g., a power light) on the portable electronic device 100 can repeatedly blink with, for example, a code indicating power cut-off.

At block 414, power can be cut-off to one or more system components 106 as described with respect to block 306 of method 300.

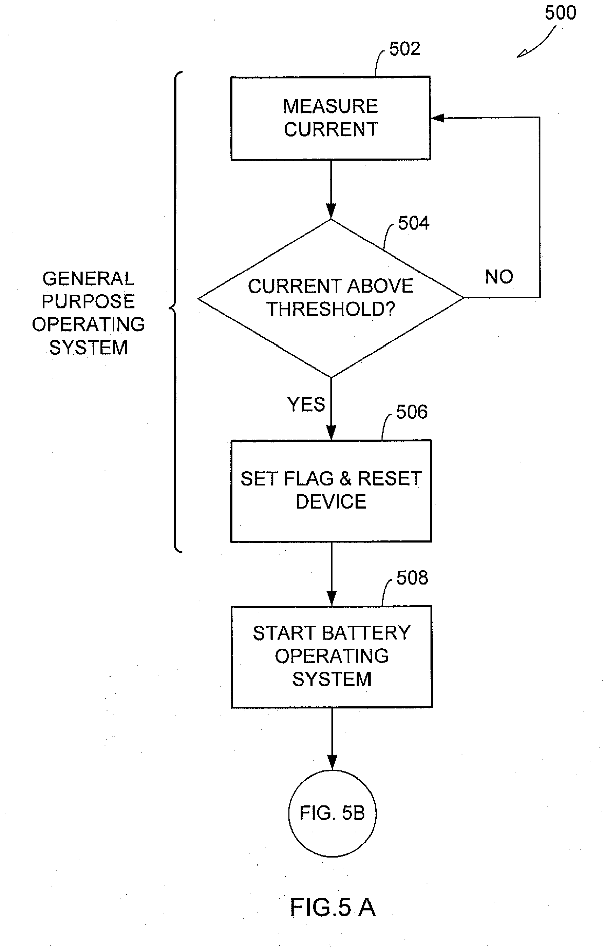

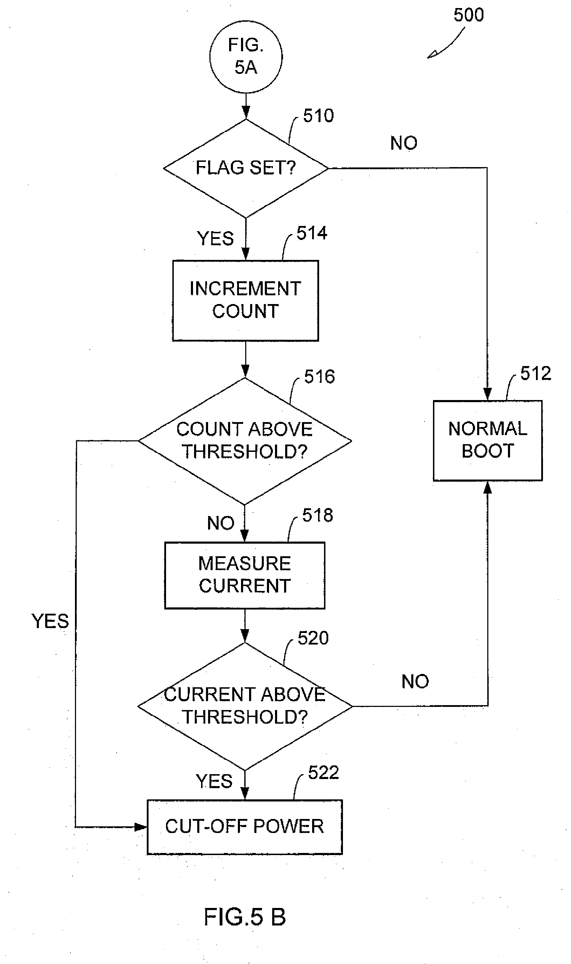

FIGs. 5A and 5B illustrate another example method 500 for cutting-off power based on current in the portable electronic device 100. In some examples, the instructions 112 can comprise software to implement a general purpose operating system on the portable electronic device 100. In an example, the general purpose operating system manages applications during interactions with a user during typical use of the portable electronic device 100. The instructions 112 (or a different set of instructions) can also comprise software to implement a startup operating system (also referred to herein as the "battery operating system"). The startup operating system can, for example, implement functions booting of the general purpose operating system. In an example, the startup operating system can verify that the battery 104 is valid (e.g., not counterfeit). Typically, the startup operating system has limited functionality and enables limited interaction with the user as compared to the general purpose operating system. In an example, once the startup operating system has completed the functions necessary for booting of the general purpose operating system, the startup operating system initiates booting of the general purpose operating system.

The startup operating system can be given the final ability to cut-off power instead of (or in addition to) the general purpose operating system, because the startup operating system may be able to more accurately determine whether there is a malfunction in the system components 106. For example, since the startup operating system has limited functionality, it may be easier for the startup operating system to determine the operating state (and thus the maximum theoretical current draw) for one or more of the system components 106.

Method 500 is an example where current measurements are obtained by the general purpose operating system during typical use of the portable electronic device 100. When one or more current readings indicate that the current draw is above the threshold current, the general purpose operating system can set a flag and reset the device. A reset of the device may, in some circumstances, address or alleviate situations created by high current flow or heating, on a long-term or temporary basis. Furthermore, a reset initiates the startup operating system upon restart of the device. The startup operating system may then make an independent measurement of the current draw and determine whether to cut-off power to the one or more system components 106.

At block 502, a current measurement can be obtained by the general purpose operating system as described with respect to block 302 of method 300, and at block 504, the current measurement can be compared to a threshold current. For simplicity, method 500 is illustrated as proceeding directly from current measurement at block 502 to threshold comparison at block 504. It should be understood, however, that in an embodiment of the invention method 500 is implemented where an operating state is determined as described with respect to block 404 of method 400 and the threshold can be dynamically determined as described with respect to block 406 of method 400 based on the operating state. When the current measurement is below the threshold, the method 500 proceeds back to 502 after an optionally delay (not shown).

When the current measurement is above the threshold, the method 500 proceeds to block 506 where a flag (e.g., a flag in a register of the processor 108) is set and a software reset of the portable electronic device 100 is initiated. In an example, a software reset can include shutting down the portable electronic device 100 and then re-starting the portable electronic device 100. For simplicity, method 500 is illustrated as proceeding directly from the threshold comparison at block 504 to flag setting and device reset at block 506. It should be understood, however, that method 500 can be implemented where the processor 108 determines whether the portable electronic device 100 is in an emergency mode as described with respect to block 410 of method 400 and/or where a notification can be made regarding the device reset similar to that described with respect to block 412 of method 400.

At block 508, after the portable electronic device 100 has shut down, the startup operating system is initiated to re-start the portable electronic device 100. FIG. 5B illustrates portions of method 500 implemented by the startup operating system. At block 510, the processor 108 determines whether the flag is set indicating that a current reading was obtained over the threshold. When the flag is not set, the method 500 proceeds to block 512 and initiates a normal boot of the general purpose operating system. When the flag is set, the method 500 proceeds to block 514.

In some examples, multiple current readings over the threshold current may be required before cutting-off power at block 522. Accordingly, in one embodiment of the invention a count is maintained indicating the number of current readings over the threshold. At block 514, the count value is incremented when the flag is set by the general purpose operating system.

At block 516, the count is compared to a threshold. When the count is above the threshold number, power is cut-off at block 522 as described with respect to bock 306 of method 300. The count value decays over time. That is, the count value is decremented after a certain length of time to account for the passage of time. For example, it may not be representative of a hardware or software error when the current reading is above the threshold current five times over a span of 1 year. Accordingly, in one example, the count value is decremented every 30 days. The count value is decremented for every 24 hours of operation of the portable electronic device 100 that there is not a current reading over the threshold current. In other examples, a certain percentage of current readings obtained at block 502 must be above the threshold current in order to proceed toward cutting-off power at block 522. For example, 8 of 10 consecutive current readings must be above the threshold current to proceed toward cutting-off power at block 522. The count value can also be used to prevent a continuous reset cycle where the general purpose operating system continually detects an over threshold condition, and the startup operating system does not detect the over threshold condition.

Notably, although the count value and the percentage of current readings are described with respect to block 516 of method 500, it should be understood that a count value and/or percentage of current readings can be implemented at other places within method 500 or within method 400 or method 300. For example, after a current reading is determined to be above the threshold current at block 504, ten more current readings can be obtained at block 502 and compared at block 504 to determine whether a certain percentage (e.g., 8 of 10) of the current readings is above the threshold current. Furthermore, a count value can be implemented instead of or in addition to the certain percentage implemented after block 504. For example, once the 8 of 10 current readings have been determined to the over the threshold current, the count value can be incremented by one. Then, after a delay, ten more current readings can be obtained at block 502 and compared at block 504. When 8 of the second 10 current readings are above the threshold current, the count value can be incremented again. When the count value reaches a threshold, a flag can be set and a device reset can be initiated by block 508. Here, for example, the startup operating system can proceed directly to block 518 after block 510. Additionally, it should be understood that the decrement time periods, percentages, and count values indicated are merely examples and the methods described herein are not limited to these specific quantities.

At block 518, the startup operating system can be configured to obtain its own current reading at block 516. Accordingly, at block 518, the startup operating system obtains a current reading from the current sensor 138 as described with respect to block 302 of method 300. At block 520, the current reading is compared to a threshold current. In an example, the operating state during startup (or a certain phase within startup) can be determinatively known, and the threshold current used at block 520 can be static. The threshold current used at block 520 can be the same or different than the threshold current used at block 504 of method 500. In an example, the current reading obtained during startup can be a more reliable indication of a malfunctioning hardware element, and, therefore, the method 520 can be less forgiving when a current reading is obtained that is over the threshold current. For example, a single current reading over the threshold current can cause the startup operating system to cut off power at block 522 regardless of the count value and/or any other current readings obtained by the general purpose operating system.

When the current reading is above the threshold, power is cut-off to one or more system components at block 522 as described with respect to block 306 of method 300. When the current reading is below the threshold, a normal boot sequence can be initiated at block 512.

In an example, a temperature reading is obtained in addition to the current reading. The temperature reading can be obtained from one or more than one location on the portable electronic device. The temperature reading can be considered in addition to the current reading prior to cutting-off power. For example, power can be cut-off when the temperature reaches a threshold temperature and when the current reaches a threshold current. In other examples, one or both of the threshold temperature and the threshold current can be dynamic. For example, the threshold temperature and the threshold current can vary inversely. Thus, as the measured temperature increases, the threshold current can decrease and vice-versa.

For simplicity, method 500 is illustrated as proceeding directly from either block 516 or block 520 to block 522 to cut-off power. It should be understood, however, that a notification that power is to be cut-off may be provided as described with respect to block 412 of method 400 prior to cutting-off power at block 522.

Additionally, any of the blocks described with respect to methods 400 and 500 can be implemented in method 300. For example, method 300 could include a delay prior to re-measuring a current at block 302. Method 300 could also include determining an operating state and dynamically setting a current threshold, Method 300 could include taking multiple current readings and using a count value and/or a percentage of readings over the threshold current. Moreover, method 300 could include notifying a user prior to cutting-off power and/or determining whether the portable electronic device 100 is in an emergency mode prior to cutting-off power. Finally, although method 500 describes certain blocks as being performed by the general purpose operating system and other blocks as being performed by the startup operating system, other examples are contemplated. For example, all the blocks could be performed by the general purpose operating system or all the blocks could be performed by the startup operating system.

Methods 300, 400, and 500 comprise software-based controls to measure a current draw and determine whether to cut-off power based on the current draw. In an example, the portable electronic device 100 can also include a hardware-based control to cut-off power. For example, as mentioned above, the portable electronic device 100 can include a watchdog circuit 132. The watchdog circuit 132 can be configured to cut-off power when an expected signal is not received from the processor 108. Thus, the watchdog circuit 132 can provide a means to cut-off power when a software and/or hardware failure causes the processor 108 to fail to properly execute the software-based control to cut-off power as described with respect to methods 300, 400, and 500.

In an example, the processor 108 is configured to periodically send a signal to the watchdog circuit 132 to indicate that the instructions 112 are being properly executed. When the watchdog circuit 132 receives the periodic signal from the processor 108, the watchdog circuit 132 does not change the state of the kill switch 130 (or the component disable switch(es) 136) to which the watchdog circuit 132 is coupled. When the watchdog circuit 132 fails to receive the periodic signal from the processor 108, the watchdog circuit 132 is configured to set the kill switch 130 (or the component disable switch(es) 136) to a non-conductive state. Thus, the watchdog circuit 132 can aid in protecting the portable electronic device 100 when the software-based system fails. For example, while the operating system is functioning properly (e.g., the portable electronic device 100 is properly executing the functionality provided by the operating system), the operating system (or system firmware) can instruct the processor 108 to send the periodic signal to the watchdog circuit 132. If, however, one or more system components 106 (e.g., the processor 108) on the portable electronic device 100 malfunctions causing the operating system to also malfunction, the processor 108 may not send the periodic signal to the watchdog circuit 132. The watchdog circuit 132 can then set the kill switch 132 (or the component disable switch(es) 136) to a non-conductive state in response to no signal (or an incorrect signal) being received from the processor 108.

The processor 108 can be configured to send almost any type of signal to the watchdog circuit 132 to indicate that the operating system is functioning properly. For example, the operating system can be configured to toggle an input of the watchdog circuit 132 at a given rate. The operating system can also be configured to send a logical one signal to the watchdog circuit every, for example, 30 seconds.

It is contemplated that the apparatus and methods described herein may be employed in concert with or in the alternative to other controls of the portable electronic device. For example, the apparatus and methods described herein generally do not exclude other apparatus or techniques for managing heat, improving safety or controlling power.

One or more embodiments or examples may realize one or more benefits. For example, the techniques described herein may contribute to heat management and may reduce the possibility of overheating of one or more components. In addition, as already noted, one or more techniques may be implemented in place of or in combination with other techniques. The described techniques generally do not exclude the implementation of any other heat management techniques. For example, determining whether a portable electronic device may overheat as a function of a measured current, and turning off a component in response to this determination, may be used in place of, in conjunctions with, or as a back-up to other heat management techniques, such as use of heat sinks, air-moving apparatus, or other electronic circuits or methods. Furthermore, the concepts may flexibly be implemented with a kill switch that is replaceable (or non-resettable) or a kill switch that is electronically resettable. The techniques may further support improved safety while also supporting emergency functionality.

### Additional Notes

The above detailed description includes references to the accompanying drawings, which form a part of the detailed description. The drawings show, by way of illustration, specific examples in which the subject matter herein can be practiced. Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, the code may be tangibly stored on one or more volatile or non-volatile computer-readable media during execution or at other times. These computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. Also, in the above Detailed Description, various features may be grouped together to streamline the disclosure. This should not be interpreted as intending that an unclaimed disclosed feature is essential to any claim. Thus, the following claims are hereby incorporated into the Detailed Description, with each claim standing on its own as a separate embodiment. The scope of the invention is to be determined with reference to the appended claims.

## Claims

1. A method (400, 500) for heat management in a portable electronic device, the method comprising:
measuring a current in the portable electronic device (402, 518);
determining an operating state of the portable electronic device (404);
dynamically setting a threshold for the current based on the operating state;
determining whether the portable electronic device will overheat at the measured current for the determined operating state by determining whether the measured current is above the threshold (406); and
turning off at least one component in the portable electronic device when it is determined that the portable electronic device will overheat (414, 522);
wherein setting the threshold includes setting the threshold based on a maximum theoretical current for the operating state; and wherein the method further comprises
incrementing a count value each time the current exceeds a threshold current based on the operating state (514); and
turning off the portable electronic device (522) when the count value exceeds a count threshold (516); wherein the count value is decremented for every a predetermined length of time of operation of the portable electronic device so that there is not a current reading over the threshold current.

2. The method of claim 1, wherein the current is measured on a supply rail for the portable electronic device.

3. The method of any one of claims 1-2, wherein turning off the at least one component includes cutting-off power to the portable electronic device (414, 522).

4. The method of any one of claims 1-3, comprising:
measuring a temperature of the portable electronic device; and
determining, as a function of the temperature, whether the portable electronic device will overheat.

5. The method of any one of claims 1-4, wherein the operating state includes whether at least one of a transmitter, a display device, a speaker, is ON or OFF.

6. The method of claim 1, comprising:
decrementing the count value to account for passage of time between over threshold current readings.

7. A portable electronic device (100) comprising:
a current sensor (138) for sensing current for at least one component (114, 116, 122, 118, 108, 110) in the portable electronic device (100);
a switch (130, 136) to turn off the power to the at least one component;
a memory (110) storing processor readable instructions (112); and
a processor (108) configured to:
obtain a current reading from the current sensor;
dynamically determine an operating state of the portable electronic device (100);
set a threshold for the current based on the determined operating state;
determine whether the portable electronic device (100) will overheat for the current reading and the determined operating state by determining whether the current reading is above the threshold; and
control the switch to turn off at least one component (114, 116, 122, 118, 108, 110) in the portable electronic device (100) when it is determined that the portable electronic device (100) will overheat;
wherein setting the threshold includes setting the threshold based on a maximum theoretical current for the operating state; and wherein the processor is further configured to:
increment a count value each time the current exceeds a threshold current based on the operating state (514); and
turn off the portable electronic device (522) when the count value exceeds a count threshold (516); wherein the count value is decremented for every a predetermined length of time of operation of the portable electronic device so that there is not a current reading over the threshold current.

8. The portable electronic device of claim 7, comprising:
a supply rail (124) for providing power to the at least one components (114, 116, 122, 118, 108, 110) in the portable electronic device (100); and
wherein the switch (130) is coupled to the supply rail (124), and wherein the processor (108) is configured to set the switch (130) to a non-conductive state to turn off all components (114, 116, 122, 118, 108,110) when it is determined the portable electronic device (100) will overheat.

9. The portable electronic device of claim 8, wherein the current sensor (138) is connected on the supply rail (124), and is configured to provide a current reading by measuring a current draw on the supply rail (124).

10. The portable electronic device of claim 8 or claim 9, comprising:
a watchdog circuit (132) coupled to the switch(130), wherein the watchdog circuit (132) is configured to set the switch (130) to a non-conductive state when a signal indicating proper functioning of a software-based system is not received at the watchdog circuit (132).

11. The portable electronic device of claim 7, wherein the operating state includes whether at least one of a transmitter, a display device, a speaker, is ON or OFF.

## Patentansprüche

1. Verfahren (400, 500) zum Wärmemanagement in einer tragbaren elektronischen Vorrichtung, wobei das Verfahren Folgendes umfasst:
Messen eines Stroms in der tragbaren elektronischen Vorrichtung (402, 518);
Bestimmen eines Betriebszustands der tragbaren elektronischen Vorrichtung (404);
dynamisches Einstellen eines Schwellenwerts für den Strom auf der Grundlage des Betriebszustands zur Bestimmung, ob die tragbare elektronische Vorrichtung bei dem gemessenen Strom für den bestimmten Betriebszustand überheizt, und zwar durch Bestimmen, ob der gemessene Strom über dem Schwellenwert (406) liegt; und
Abschalten zumindest einer Komponente in der tragbaren elektronischen Vorrichtung, wenn bestimmt wird, dass die tragbare elektronische Vorrichtung überheizen wird (414, 522);
wobei das Einstellen des Schwellenwerts das Einstellen des Schwellenwerts basierend auf einem maximalen theoretischen Strom für den Betriebszustand beinhaltet; und wobei das Verfahren ferner Folgendes umfasst:
Erhöhen eines Zählwerts jedes Mal, wenn der Strom einen Schwellenwert auf der Grundlage des Betriebszustands (514) überschreitet; und
Abschalten der tragbaren elektronischen Vorrichtung (522), wenn der Zählwert einen Zählschwellenwert (516) überschreitet; wobei der Zählwert für jede vorbestimmte Betriebsdauer der tragbaren elektronischen Vorrichtung verringert wird, so dass kein Stromwert über dem Schwellenwert auftritt.

2. Verfahren nach Anspruch 1, wobei der Strom an einer Versorgungsschiene für die tragbare elektronische Vorrichtung gemessen wird.

3. Verfahren nach einem beliebigen der vorstehenden Ansprüche 1 bis 2, wobei das Abschalten der zumindest einen Komponente eine Abschaltleistung für die tragbare elektronische Vorrichtung (414, 522) beinhaltet.

4. Verfahren nach einem beliebigen der vorstehenden Ansprüche 1 bis 3, umfassend:
Messen einer Temperatur der tragbaren elektronischen Vorrichtung; und
als Funktion der Temperatur bestimmen, ob die tragbare elektronische Vorrichtung überheizen wird.

5. Verfahren nach einem beliebigen der vorstehenden Ansprüche 1 bis 4, wobei der Betriebszustand beinhaltet, ob zumindest einer von einem Sender, einer Anzeigevorrichtung oder einem Lautsprecher AN oder AUS ist.

6. Verfahren nach Anspruch 1, das ferner Folgendes umfasst:
Verringern des Zählwerts, um den Zeitablauf zwischen den Stromwerten über dem Schwellenwert zu berücksichtigen.

7. Tragbare elektronische Vorrichtung (100), umfassend:
einen Stromsensor (138) zum Erfassen des Stroms zumindest einer Komponente (114, 116, 122, 118, 108, 110) in der tragbaren elektronischen Vorrichtung (100);
einen Schalter (130, 136) zum Abschalten der Stromversorgung zumindest einer Komponente;
einen Speicher (110), der prozessorlesbare Anweisungen (112) speichert; und
einen Prozessor (108), der so konfiguriert ist, dass er:
einen Stromwert vom Stromsensor erhält;
dynamisch einen Betriebszustand der tragbaren elektronischen Vorrichtung (100) bestimmt;
einen Schwellenwert für den Strom auf der Grundlage des bestimmten Betriebszustands festlegt;
Bestimmen, ob die tragbare elektronische Vorrichtung (100) beim Stromwert und dem bestimmten Betriebszustand überheizt, und dies durch Bestimmen, ob der Stromwert über dem Schwellenwert liegt; und
Steuern des Schalters, damit er zumindest eine Komponente (114, 116, 122, 118, 108, 110) in der tragbaren elektronischen Vorrichtung (100) abschaltet, wenn bestimmt wird, dass die tragbare elektronische Vorrichtung (100) überheizen wird;
wobei das Einstellen des Schwellenwerts das Einstellen des Schwellenwerts auf der Grundlage eines maximalen theoretischen Stroms für den Betriebszustand beinhaltet; und wobei der Prozessor ferner so konfiguriert ist, dass er:
einen Zählwert jedes Mal erhöht, wenn der Strom einen Schwellenwert auf der Grundlage des Betriebszustands (514) überschreitet; und
Abschalten der tragbaren elektronischen Vorrichtung (522), wenn der Zählwert einen Zählschwellenwert (516) überschreitet; wobei der Zählwert für jede vorbestimmte Länge der Betriebsdauer der tragbaren elektronischen Vorrichtung verringert wird, so dass es keinen Stromwert über dem Schwellenstrom gibt.

8. Tragbare elektronische Vorrichtung nach Anspruch 7, umfassend:
eine Versorgungsschiene (124) zur Stromversorgung der zumindest einen Komponente (114, 116, 122, 118, 108, 110) in der tragbaren elektronischen Vorrichtung (100); und
wobei der Schalter (130) mit der Versorgungsschiene (124) gekoppelt ist, und wobei der Prozessor (108) so konfiguriert ist, dass er den Schalter (130) in einen nichtleitenden Zustand versetzt, um alle Komponenten (114, 116, 122, 118, 108, 110) abzuschalten, wenn bestimmt wird, dass die tragbare elektronische Vorrichtung (100) überheizen wird.

9. Tragbare elektronische Vorrichtung nach Anspruch 8, wobei der Stromsensor (138) an die Versorgungsschiene (124) angeschlossen und so konfiguriert ist, dass er einen Stromwert durch Messen einer Stromaufnahme an der Versorgungsschiene (124) bereitstellt.

10. Tragbare elektronische Vorrichtung nach Anspruch 8 oder Anspruch 9, umfassend:
eine mit dem Schalter (130) gekoppelte Watchdog-Schaltung (132), wobei die Watchdog-Schaltung (132) so konfiguriert ist, dass sie den Schalter (130) in einen nichtleitenden Zustand versetzt, wenn ein Signal, das die ordnungsgemäße Funktion eines softwarebasierten Systems anzeigt, an der Watchdog-Schaltung (132) nicht empfangen wird.

11. Tragbare elektronische Vorrichtung nach Anspruch 7, wobei der Betriebszustand beinhaltet, ob zumindest einer von einem Sender, einer Anzeigevorrichtung oder einem Lautsprecher AN oder AUS ist.

## Revendications

1. Procédé (400, 500) de gestion de la température d'un dispositif électronique portable, le procédé comprenant les étapes consistant à :
mesurer un courant dans le dispositif électronique portable (402, 518) ;
déterminer un état de fonctionnement du dispositif électronique portable (404) ;
définir de façon dynamique un seuil pour le courant, sur la base de l'état de fonctionnement ;
déterminer s'il y aura surchauffe du dispositif électronique portable avec le courant mesuré pour l'état de fonctionnement déterminé en déterminant si le courant mesuré est au-dessus du seuil (406) ; et
mettre hors tension au moins un composant dans le dispositif électronique portable lorsqu'il est déterminé qu'il y aura surchauffe du dispositif électronique portable (414, 522) ;
dans lequel la définition du seuil comporte la définition du seuil sur la base d'un courant théorique maximal pour l'état de fonctionnement ; et dans lequel le procédé comprend en outre les étapes consistant à
incrémenter une valeur de comptage chaque fois que le courant dépasse un courant de seuil sur la base de l'état de fonctionnement (514) ; et
mettre hors tension le dispositif électronique portable (522) lorsque la valeur de comptage dépasse un seuil de comptage (516) ; dans lequel la valeur de comptage est décrémentée pour chaque durée prédéterminée de fonctionnement du dispositif électronique portable de sorte qu'il n'y ait pas de relevé de courant au-dessus du courant de seuil.

2. Procédé selon la revendication 1, dans lequel le courant est mesuré sur un rail d'alimentation du dispositif électronique portable.

3. Procédé selon l'une quelconque des revendications 1 et 2, dans lequel la mise hors tension de l'au moins un composant comporte la coupure de l'alimentation du dispositif électronique portable (414, 522).

4. Procédé selon l'une quelconque des revendications 1 à 3, comprenant les étapes consistant à :
mesurer une température du dispositif électronique portable ; et
déterminer, en fonction de la température, s'il y aura surchauffe du dispositif électronique portable.

5. Procédé selon l'une quelconque des revendications 1 à 4, dans lequel l'état de fonctionnement doit établir si au moins l'un parmi un émetteur, un dispositif d'affichage ou un haut-parleur est sur MARCHE ou ARRÊT.

6. Procédé selon la revendication 1, comprenant les étapes consistant à :
décrémenter la valeur de comptage pour tenir compte du passage du temps entre des lectures de courant au-dessus du seuil.

7. Dispositif électronique portable (100) comprenant :
un capteur de courant (138) pour détecter le courant d'au moins un composant (114, 116, 122, 118, 108, 110) dans le dispositif électronique portable (100) :
un commutateur (130, 136) pour mettre hors tension l'au moins un composant ;
une mémoire (110) stockant des instructions lisibles par processeur (112) ; et
un processeur (108) configuré pour :
obtenir un relevé de courant à partir du capteur de courant ;
déterminer de façon dynamique un état de fonctionnement du dispositif électronique portable (100) ;
définir un seuil pour le courant sur la base de l'état de fonctionnement déterminé ;
déterminer s'il y aura surchauffe du dispositif électronique portable (100) avec le relevé de courant et l'état de fonctionnement déterminé en déterminant si le relevé de courant est au-dessus du seuil ; et
commander le commutateur pour mettre hors tension au moins un composant (114, 116, 122, 118, 108, 110) dans le dispositif électronique portable (100) lorsqu'il est déterminé qu'il y aura surchauffe du dispositif électronique portable (100) ;
dans lequel la définition du seuil comporte la définition du seuil sur la base d'un courant théorique maximal pour l'état de fonctionnement ; et dans lequel le processeur est en outre configuré pour :
incrémenter une valeur de comptage chaque fois que le courant dépasse un courant de seuil sur la base de l'état de fonctionnement (514) ; et
mettre hors tension le dispositif électronique portable (522) lorsque la valeur de comptage dépasse un seuil de comptage (516) ; dans lequel la valeur de comptage est décrémentée pour chaque durée prédéterminée de fonctionnement du dispositif électronique portable de sorte qu'il n'y ait pas de relevé de courant au-dessus du courant de seuil.

8. Dispositif électronique portable selon la revendication 7, comprenant :
un rail d'alimentation (124) pour alimenter en puissance l'au moins un composant (114, 116, 122, 118, 108, 110) dans le dispositif électronique portable (100) ; et
dans lequel le commutateur (130) est couplé au rail d'alimentation (124), et dans lequel le processeur (108) est configuré pour régler le commutateur (130) sur un état non conducteur afin de mettre hors tension tous les composants (114, 116, 122, 118, 108, 110) lorsqu'il est déterminé qu'il y aura surchauffe du dispositif électronique portable (100).

9. Dispositif électronique portable selon la revendication 8, dans lequel le capteur de courant (138) est raccordé sur le rail d'alimentation (124), et est configuré pour fournir un relevé de courant en mesurant une consommation de courant sur le rail d'alimentation (124).

10. Dispositif électronique portable selon la revendication 8 ou la revendication 9, comprenant :
un circuit de surveillance (132) couplé au commutateur (130), dans lequel le circuit de surveillance (132) est configuré pour régler le commutateur (130) sur un état non conducteur lorsque le circuit de surveillance (132) ne reçoit pas de signal indiquant qu'un système logiciel fonctionne correctement.

11. Dispositif électronique portable selon la revendication 7, dans lequel l'état de fonctionnement doit établir si au moins l'un parmi un émetteur, un dispositif d'affichage ou un haut-parleur est sur MARCHE ou ARRÊT.
